(19) Europäisches Patentamt / European Patent Office / Office européen des brevets

(11) **EP 2 695 416 B1**

(12) **EUROPEAN PATENT SPECIFICATION**

(45) Date of publication and mention of the grant of the patent:
**10.12.2014 Bulletin 2014/50**

(51) Int Cl.:
***H04W 24/02*** *(2009.01)*      ***H04W 28/04*** *(2009.01)*
***H04W 72/08*** *(2009.01)*

(21) Application number: **11811193.9**

(22) Date of filing: **21.12.2011**

(86) International application number:
**PCT/SE2011/051559**

(87) International publication number:
**WO 2012/138273 (11.10.2012 Gazette 2012/41)**

(54) **LIMITING INTERFERENCE IN A HETEROGENEOUS WIRELESS COMMUNICATION SYSTEM**

INTERFERENZBEGRENZUNG IN EINEM HETEROGENEN DRAHTLOSEN KOMMUNIKATIONSSYSTEM

LIMITATION DU BROUILLAGE DANS UN SYSTÈME DE COMMUNICATION SANS FIL HÉTÉROGÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.04.2011 US 201161471603 P**

(43) Date of publication of application:
**12.02.2014 Bulletin 2014/07**

(73) Proprietor: **Telefonaktiebolaget LM Ericsson (PUBL)**
**164 83 Stockholm (SE)**

(72) Inventors:
• **DIMOU, Konstantinos**
**S-113 41 Stockholm (SE)**
• **KAZMI, Muhammad**
**S-167 39 Bromma (SE)**

(74) Representative: **Sjöberg, Mats Hakan**
**Ericsson AB**
**Patent Unit Kista**
**RAN Implementation & Core (PU-KRIC)**
**Torshamnsgatan 21-23**
**164 80 Stockholm (SE)**

(56) References cited:
**US-A1- 2009 197 588      US-A1- 2009 257 353**
**US-A1- 2009 264 077      US-A1- 2009 290 518**
**US-A1- 2010 220 597**

**Description**

TECHNICAL FIELD

The invention relates to limitation of interference in heterogeneous wireless communication systems. More particularly, the invention relates to a method and interference assessment capable device for investigating interference in a heterogeneous wireless communication system as well as to a method for handling interference in a heterogeneous wireless communication system and a first network node in a heterogeneous wireless communication system.

BACKGROUND

In a typical cellular radio system, wireless terminals (also known as mobile stations and/or user equipment units (UEs)) communicate via a radio access network (RAN) to one or more core networks. The wireless terminals can be mobile stations or user equipment units (UE) such as mobile telephones ("cellular" telephones) and laptops with wireless capability (e.g., mobile termination), and thus can be, for example, portable, pocket, hand-held, computer-included, or car-mounted mobile devices which communicate voice and/or data via radio access network.

The radio access network (RAN) covers a geographical area which is divided into cell areas, with each cell area being served by a base station, e.g., a radio base station (RBS), which in some networks is also called "NodeB" or "B node". A cell is a geographical area where radio coverage is provided by the radio base station equipment at a base station site. Each cell is identified by an identity within the local radio area, which is broadcast in the cell. The base stations communicate over the air interface operating on radio frequencies with the user equipment units (UE) within range of the base stations.

In some versions (particularly earlier versions) of the radio access network, several base stations are typically connected (e.g., by landlines or microwave) to a radio network controller (RNC). The radio network controller, also sometimes termed a base station controller (BSC), supervises and coordinates various activities of the plural base stations connected thereto. The radio network controllers are typically connected to one or more core networks.

The Universal Mobile Telecommunications System (UMTS) is a third generation mobile communication system, which evolved from the Global System for Mobile Communications (GSM), and is intended to provide improved mobile communication services based on Wideband Code Division Multiple Access (WCDMA) access technology. UMTS Terrestrial Radio Access Network (UTRAN) is essentially a radio access network using wideband code division multiple access for user equipment units (UEs). The Third Generation Partnership Project (3GPP) has undertaken to evolve further the UTRAN and GSM based radio access network technologies. Long Term Evolution (LTE) is a variant of a 3GPP radio access technology wherein the radio base station nodes are connected directly to a core network rather than to radio network controller (RNC) nodes. In general, in LTE the functions of a radio network controller (RNC) node are performed by the radio base station nodes. As such, the radio access network (RAN) of an LTE system has an essentially "flat" architecture comprising radio base station nodes without reporting to radio network controller (RNC) nodes.

A challenging question for operators is how to evolve their existing cellular networks so as to meet this requirement for higher data rates. In this respect, a number of directions have been indicated: i) either to increase the density of their existing macro base stations, ii) or to increase cooperation of macro base station, or iii) to deploy smaller base stations in areas where high data rates are needed within a macro base stations grid. The last option is termed in the related literature "Heterogeneous Network", or "Heterogeneous Deployment".

According to the 3GPP definition, heterogeneous network comprises 2 or more layers where each layer is served by one type of base station (BS) class or type. In a 2-layered macro-femto heterogeneous network typically the macro cell and femto cell layers comprise of macro base stations and home base stations respectively. In co-channel heterogeneous network all layers operate on the same carrier frequency.

Within a heterogeneous deployment, the macro layer grid can serve mainly users moving at high speed, or wider areas where the demand for high data rates is not that high and the grid consisting of small base station can cater for areas with many users asking for high data rates. These areas are also termed hotspots.

The femto base station, which is interchangeably called as the home base station (HBS), typically serves private premises or small office environment. Another main characteristic of home BS is that it is typically owned by a private subscriber, who has the liberty to install it at any location. Although operator may also own the HBS but its location may not be fixed. For example the subscriber may move the HBS from one part of the house to another. Thus strict network planning may not be possible or can be challenging in case of HBS deployment. This is in contrast with other base station classes, which are deployed by an operator according to some well defined principles.

The access control mechanism for the HBS decides if a given user can or cannot connect to that home base station. In UTRAN and Evolution UMTS Terrestrial Radio Access Network (E-UTRAN), the concept of closed subscriber group (CSG) exists. According to the CSG concept, only a subset of users, defined by the owner of the home base station, can connect to that particular HBS. Hence access to other users is denied by the CSG-based HBS. It is also interchangeably called as CSG nodes or simply low power nodes (LPNs) or even CSG LPN. The access control mechanism of CSG nodes has a large impact on the interference in the network. For example the interference occurs when users connected to macro base stations are located very close to CSG HBS. In this scenario UEs served by macro cells or macro UEs (MUE) create high interference towards the CSG HBS. Similarly transmissions from CSG HBS create interference to these users connected to macro BS. These problems need to be addressed in order to attain substantial overall performance gain in heterogeneous deployments.

Schemes to avoid interference by the virtue of coordinated resource partitioning in time domain or frequency domain between different layers in heterogeneous network exist. However due to lack of backhaul communication between CSG nodes and macro nodes, the coordination of resources between CSG and macro nodes is not practically possible. Furthermore the traffic distribution between macro and CSG layers is highly asymmetric in that the latter bears very low traffic.

Another solution for these interference problems is the use of carrier aggregation (CA). According to this scheme in CSG - macro heterogeneous deployment - the macro base stations use all available bandwidth but only one of the carriers is used as the primary composite carrier which carries the control channel, e.g. Physical Downlink Control Channel (PDCCH) in LTE. The CSG HBS employ the other carrier as primary composite carrier. The main limitation of using carrier aggregation (CA) is that more than one carrier is required. Carrier Aggregation is also used in order to enhance peak-rates within a technology, multi-carrier or carrier aggregation solutions are used. For example, it is possible to use multiple 5MHz carriers in High Speed Packet Access (HSPA) to enhance the peak-rate within the HSPA network, and aggregate two or more LTE carriers in LTE. Each carrier in multi-carrier or carrier aggregation system is generally termed as a component carrier (CC) or sometimes is also referred to as a cell. In simple words the component carrier (CC) means an individual carrier in a multi-carrier system. The term carrier aggregation (CA) is also called (e.g. interchangeably called) "multi-carrier system", "multi-cell operation", "multi-carrier operation", "multi-carrier" transmission and/or reception. This means the CA is used for transmission of signaling and data in the uplink and downlink directions. One of the CCs is the primary carrier or anchor carrier and the remaining ones are called secondary or supplementary carriers. Generally the primary or anchor CC carries the essential UE specific signaling. The primary CC exists in both uplink and direction CA. The network may assign different primary carriers to different UEs operating in the same sector or cell.

Thanks to carrier aggregation, the UE has more than one serving cell: one primary serving cell and one or more secondary serving cell. The serving cell is interchangeably called as primary cell (PCell) or primary serving cell (PSC). Similarly the secondary serving cell is interchangeably called as secondary cell (SCell) or secondary serving cell (SSC). Regardless of the terminology, the PCell and SCell(s) enable the UE to receive and transmit data. More specifically the PCell and Scell exist in downlink (DL) and uplink (UL) for the reception and transmission of data by the UE. The remaining non-serving cells on the PCC and SCC are called neighbor cells.

The CCs belonging to the CA may belong to the same frequency band (aka intra-band CA) or to different frequency band (inter-band CA) or any combination thereof (e.g. 2 CCs in band A and 1 CC in band B). The carriers in intra-band CA can be adjacent (aka contiguous) or non-adjacent (aka non-contiguous). In non-adjacent intra-band CA, the carriers in gaps are used by other operators. Typically in intra-band CA the UE may require single RF receiver chain and RF transmitter chain for receiving and transmitting the aggregated carriers respectively, especially when the total aggregated carriers are within certain limit e.g. 20 MHz in total for HSPA or 40 MHz in total for LTE. Otherwise the UE may have to implement more than one RF transmitter/receiver chains for aggregated larger number of carriers and particularly in case of non-contiguous CA.

Typically in a heterogeneous network comprising of the macro network nodes (MN) and closed subscriber group (CSG) nodes there is lack of backhaul communication between the macro and CSG nodes. For example according to the baseline assumption in LTE there is no X2 interface between the macro and CSG nodes. Due to the lack of backhaul communication the macro and CSG nodes may simultaneously assign the same resources to the Macro UE (MUE) and the UE served by the Home Base Station, here named Home UE (HUE), respectively. Furthermore, as described earlier the Macro UE (MUE) cannot be served by the closed subscriber group (CSG) without an explicit permission from the CSG. As a consequence the Macro UE (MUE) may be located in close proximity to the CSG. Several closed subscriber groups (CSG) may also be located in the same vicinity. There is however no communication link between the CSGs. This means Home UE (HUE) served by a first closed subscriber group may be located very close to another closed subscriber group CSG2. In other words, a Home UE (HUE) may not be connected to the strongest HBS. These limitations give rise to a number of problems that have to be handled.

Prior art document US 2009/0197588 A1 discloses a method for interference reduction and/or avoidance.

Most of the prior art inter-cell interference coordination (ICIC) solutions aim to mitigate interference by coordinating the split of resources between the macro and CSG by the virtue of the backhaul communication, e.g., via core network or via direct communication link between macro and CSG. However, as stated above, in practice such communication does not exist or is very limited.

Another set of prior art solutions aims to adjust the transmit power of the transmitter of an aggressor, i.e. an entity interfering another entity, in order to avoid the interference towards the receiver of a victim, i.e. an entity experiencing interference. For example it is well known in the prior art that the closed subscriber group (CSG) downlink (DL) transmit power is lowered to prevent interference towards the Macro UE (MUE). Similarly it is known that the Macro UE (MUE) output power can be lowered to reduce interference towards the closed subscriber group (CSG) receiver.

The problem with these solutions is that the reduction of the victim's transmitter power leads to reduction in the throughput as well as the peak data rate. Furthermore, due to inaccuracy in the estimation of the interference, which is used as the trigger for lowering the transmitter power of the aggressor, these activities may not always guarantee proper interference mitigation.

Another set of solutions aim to partition resources in frequency and/or time domain between macro and CSG layers for the purpose of interference avoidance. However, simulation results have shown that in macro-CSG heterogeneous deployment the macro cell layer is hardly offloaded whilst CSG based HBS are hardly utilized. Studies have shown that Downlink (DL) Physical Resource Block (PRB) utilization within the CSG HBS is around 1-2% even if 20 % of all the users are connected to CSG HBS. On the contrary, macro base stations are fully occupied with the DL PRB utilization being close to 100%. Hence any action taken by the macro layer to avoid interfering towards the CSG HBS such as by using resource sharing in time or frequency or CA will lead to higher cost in terms of reduction of resources in the macro layer. Hence these schemes are not feasible for macro-CSG heterogeneous deployment. Furthermore as stated earlier that due to lack of backhaul links between macro and CSG nodes this type of resource coordination cannot be easily implemented in practice.

There is thus a need for limiting interference in a wireless communication system when there is a mixture of network nodes serving user equipment units.

SUMMARY

The invention is thus directed towards limiting interference in a heterogeneous wireless communication system.

One object of the invention is thus to limit interference in a heterogeneous wireless communication system.

This object is according to a first aspect of the invention achieved through an interference assessment capable device for investigating interference in a heterogeneous mobile communication system, according to claim 1.

The object is according to a second aspect of the invention achieved through a method for investigating interference in a heterogeneous mobile communication system, according to claim 17.

Further embodiments are defined in the dependent claims.

In another of its aspects the technology disclosed herein concerns a method in a user equipment unit (UE) served by a first network node of a heterogeneous wireless communication system comprising a macro network node (MN) and a home base station (HBS) with restricted access for implicitly and/or explicitly detecting the transmission activity in the second network node; and signaling the information about the detected transmission activity to the first network node.

In yet another of its aspects the technology disclosed herein concerns a method in a user equipment unit (UE) of triggering the detection of the downlink transmission activity in the second network node based upon a pre-determined rule or upon receiving explicit request from its serving first network node.

In further another of its aspects the technology disclosed herein concerns a method in a first network node serving a UE in a heterogeneous wireless communication system, the system comprising a macro network node (MN) and a home base station (HBS) with restricted access for requesting the UE to implicitly and/or explicitly detect the transmission activity in the second network node, and the information about the detected transmission activity in the second network node from the user equipment unit (UE).

In another of its aspects the method in the first network node further comprises selecting one or more parameters associated with the transmission and/or activity level of the UE while taking into account the received information from the UE about the detected transmission activity in the second network node; and signaling the acquired information to the third node which may use the information for improving the network planning and coverage.

The first node is the serving network node and the second network node may be a neighboring network node in a heterogeneous network.

The macro network node (MN) and the HBS layers are assumed to operate on the same carrier frequency (i.e. co-channel deployment). However the technology disclosed herein is also applicable to the case when the macro and HBS layers operate on different carrier frequencies.

The invention has a number of advantages. It enables mitigation of interference in a number of heterogeneous network scenarios. More specifically the interference is avoided or reduced even in case there is a lack of backhaul communication between network nodes.

It should be emphasized that the term "comprises/comprising" when used in this specification is taken to specify the presence of stated features, integers, steps or components, but does not preclude the presence or addition of one or more other features, integers, steps, components or groups thereof.

BRIEF DESCRIPTION OF THE DRAWINGS

The invention will now be described in more detail in relation to the enclosed drawings, in which:

fig. 1A is a diagrammatic view illustrating a homogenous network with macro cells/nodes,
fig. 1B is a diagrammatic view illustrating a heterogeneous network including macro cells/nodes and femto or micro cells/nodes,
fig. 2 is a diagrammatic illustrating a macro cell provided by a macro base station and covering a femto base station and a user equipment being served by the macro cell,
fig. 3 is a diagrammatic illustrating (a) an aggressor home base station causing the interference towards a victim user equipment unit being served by a macro base station, and (b) an aggressor home base station causing the interference towards a victim user equipment unit served by a further home base station,
fig. 4 is a diagrammatic illustrating (a) an aggressor user equipment being served by a macro base station causing interference towards a victim closed service group home base station: (b) an aggressor user equipment unit connected to the further home base station and causing interference towards victim home base station,
fig. 5 is a diagrammatic view of at least a portion of a communications network,
fig. 6 is a diagrammatic view of example portions of a user equipment unit,
fig. 7 is a diagrammatic view of example portions of a first network node,
fig. 8 schematically shows a flow chart of a number of method steps being performed in an investigating device according to a first embodiment of the invention,
fig. 9 schematically shows a flow chart of a number of method steps being performed in a serving base station according to the first embodiment of the invention, fig. 10 shows a flow chart of a number of method steps being performed in a serving base station according to a second embodiment of the invention,
fig. 11 shows a flow chart of a number of further method steps being performed in the mobile station acting as an investigating device according to the second embodiment of the invention,
fig. 12 shows a flow chart of a number of method steps being performed in the mobile station acting as an investigating device according to a third embodiment of the invention,
fig. 13 shows a flow chart of a number of method steps being performed in a serving base station according to the third embodiment of the invention, and fig. 14 is a diagrammatic view of example portions of a first network node.

DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. That is, those skilled in the art will be able to devise various arrangements which, although not explicitly described or shown herein, embody the principles of the invention and are included within its spirit and scope. In some instances, detailed descriptions of well-known devices, circuits, and methods are omitted so as not to obscure the description of the invention with unnecessary detail. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that block diagrams herein can represent conceptual views of illustrative circuitry or other functional units embodying the principles of the technology. Similarly, it will be appreciated that any flow charts, state transition diagrams, pseudo-code, and the like represent various processes which may be substantially represented in computer readable medium and so executed by a computer or processor, whether or not such computer or processor is explicitly shown.

The functions of the various elements including functional blocks, including but not limited to those labeled or described as "computer", "processor" or "controller", may be provided through the use of hardware such as circuit hardware and/or hardware capable of executing software in the form of coded instructions stored on computer readable medium. Thus, such functions and illustrated functional blocks are to be understood as being either hardware-implemented and/or computer-implemented, and thus machine-implemented.

In terms of hardware implementation, the functional blocks may include or encompass, without limitation, digital signal processor (DSP) hardware, reduced instruction set processor, hardware (e.g., digital or analog) circuitry including but not limited to application specific integrated circuit(s) [ASIC], and (where appropriate) state machines capable of performing such functions.

In terms of computer implementation, a computer is generally understood to comprise one or more processors or one or more controllers, and the terms computer and processor and controller may be employed interchangeably herein. When provided by a computer or processor or controller, the functions may be provided by a single dedicated computer or processor or controller, by a single shared computer or processor or controller, or by a plurality of individual computers or processors or controllers, some of which may be shared or distributed. Moreover, use of the term "processor" or "controller" shall also be construed to refer to other hardware capable of performing such functions and/or executing software, such as the example hardware recited above.

The following generic terminologies are used in the disclosure for consistency and simplicity. They are described below:

Macro and home base station (HBS) nodes: The technology disclosed herein may apply to a heterogeneous network comprising of network nodes using any technology including High speed packet access (HSPA), Long Term Evolution (LTE), Code Division Multiple Access 2000 (CDMA2000), Global System for Mobile communications (GSM) etc. or mixture of technologies such as multistandard radio (MSR) node (e.g. LTE/HSPA, GSM/HSPA/LTE, CDMA2000/LTE etc).

Furthermore the technology disclosed herein may apply to different types of nodes, e.g., base station (BS), Base Transceiver Station (BTS), evolved Node B (eNode B), Node B, relay, donor node serving a relay node (e.g. donor base station, donor Node B, donor eNB). Therefore in the technology disclosed herein a generic term such as macro network node or simply macro node (MN) and home base station (HBS) are used. Furthermore instead of using closed subscriber group (CSG), a more generic term HBS with restricted access is used. Hence CSG node or CSG Low power node (LPN) can be regarded as a special case of HBS with restricted access. The term HBS and HBS with restricted access may interchangeably be used but both refer to the same type of node.

The macro node such as macro BS is also called as wide area BS, which serves users in macro cell. The wide area and home BS power classes are defined for HSPA and LTE in 25.104. See e.g. 3GPP TS 25.104, "Base Station (BS) radio transmission and reception (FDD)", which is herein incorporated by reference, and 36.104, 3GPP TS 36.104, "Evolved Universal Terrestrial Radio Access (E-UTRA) and Evolved Universal Terrestrial Radio Access (E-UTRAN); Base station (BS) radio transmission and reception", which is herein incorporated by reference.

User Equipment (UE) in the form of Home UE (HUE) and Macro UE (MUE): The terms "home UE (HUE)" and "macro UE (MUE)" denote UEs which are camped on or connected to or served by the home base station (HBS) and macro network node (MN), respectively.

First Node: The first network node hereinafter refers to the network node which serves the UE. Example of first nodes, not limited to, are macro eNode B, home BS, Radio Network Controller (RNC), Node B, base station, donor eNode B, donor Node B, donor BS, relay node, BSC etc. In LTE based macro-HBS heterogeneous network examples of the serving node can be macro eNode B serving its macro UE (MUE) and home eNode B serving its home UE (HUE). Yet another example is that of macro donor eNode B serving MUE and relay. In HSPA based macro-HBS heterogeneous network the serving node can be macro RNC serving its macro UE (MUE) and home Node B serving its home UE (HUE).

Second Node: The second network node hereinafter refers to a neighboring network node, i.e., node which is neighbor to the first node. Example of second nodes, not limited to, are macro eNode B, home BS, Node B, base station, donor eNode B serving relay, donor Node B serving relay, donor BS serving, relay node etc. In LTE based macro-HBS heterogeneous network the examples of neighboring nodes are macro eNode B and home eNode B. Yet another example is that of macro donor eNode B. In HSPA based macro-HBS heterogeneous network the neighboring nodes are Node B and home Node B.

Third Node: The third node is a node which can acquire the determined transmission activity level information from the first node. Examples of third node are Self Organizing Network (SON), Operational Support Systems (OSS), Operation and Maintenance (O&M), network planning and management, RNC, BSC, Node B, eNode B, etc.

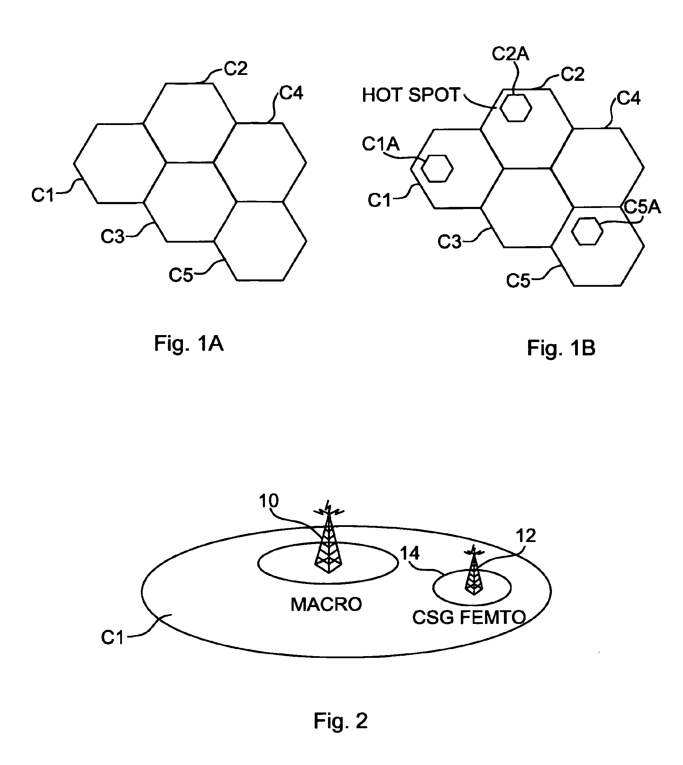

It is known to provide mobile communication systems in the form of cells. Fig. 1a schematically shows five neighbouring cells C1, C2, C3, C4 and C5. These cells are macro cells. The cells are typically provided through the use of corresponding base stations, where a base station may provide one or more cells each. Traditionally cells have had essentially the same size, as is shown in fig. 1A, meaning that a cell typically covers the same area. However, nowadays cell sizes can vary a lot more, such as shown in fig. 1B, where a macro cell can cover a smaller cell, such as a pico or a femto cell. In fig. 2B there is shown how a first macro cell C1 covers a smaller cell C1A and how the second macro cell C2 covers a smaller cell C2A. Fig. 1B also shows how the macro cell C5 covers a smaller cell C5A, where these smaller cells are typically pico cells or femto cells.

Pico cells are typically deployed by the network operator in order to handle areas where traffic load is higher, often denoted hot spots. Femto cells are even smaller cells and provided in relation to private property. This means that a user, for instance the owner of a household may have his own femto cell. Furthermore femto cells may be deployed anywhere in an area where there are macro and pico cells. This means that a network operator may have knowledge of the macro and pico cells and can therefore plan these cells, for instance in relation to resource allocation such as frequency allocation, so that they do not interfere each other. However, the operator cannot do that with femto cells.

Fig. 2 schematically shows a macro cell C1 provided by a macro base station 10 and a femto base station 12 provided inside this macro cell and being located next to a user equipment unit 14. The macro base station 10 will in some embodiments of the invention form a first network node and the femto base station 12 a second network node.

A femto cell will normally not be able to interfere a macro cell. However, it may interfere mobile stations served by a macro cell. It may also interfere a pico cell as well as other femto cells.

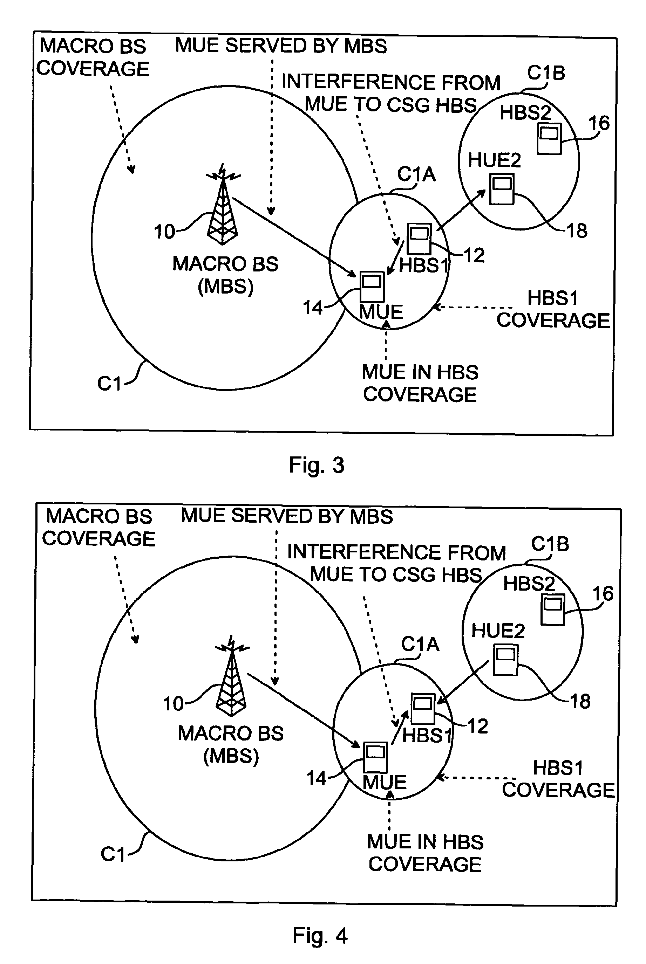

Fig. 3 shows a macro base station 10 MBS serving a user equipment 14 MUE, and being located close to a first home base station HBS1 12. There is also a second home base station HBS2 16 serving a further UE 18, here denoted HUE2. The macro base station MBS 10 here provides a first cell C1 and the first home base station 12 HBS1 provides a second smaller cell C1A, while the second home base station HBS2 provides a further cell C1B. The user equipment MUE 14 being served by the macro base station MBS 10 is in the coverage area or cell provided by the first home base station HBS1 212 with the further UE HUE2 18 being served by and located in the coverage area of the second home base station HBS2 16. The first home base station HBS1 12 is here an aggressor that causes interference towards a victim, the user equipment unit MUE 14 served by the macro base station 10, and also the interference towards a victim, the further UE HUE2 18 served by HBS2 16.

Fig. 4 shows the same base stations, UEs and cells as in fig. 3. However here the MUE 14 is an aggressor causing interference towards victim CSG HBS1 12 and the further UE HUE2 18 is also an aggressor HUE connected to HBS2 16 causing interference towards victim HBS1.

The problems experienced in the situations depicted in fig. 3 and 4 are the following:

Typically in a heterogeneous wireless communication system, i.e. in a heterogeneous network comprising of the macro network nodes (MN), like the macro base station MBS 10, and closed subscriber group (CSG) nodes, like the first and second home base stations HBS1 and HBS2 12 and 16, there is lack of backhaul communication between the macro and CSG nodes. For example according to the baseline assumption in LTE there is no X2 interface between the macro and CSG nodes. Due to the lack of backhaul communication the macro and CSG nodes may simultaneously assign the same resources to the Macro UE 14 (served by macro node 10) (MUE), , and the Home UE 18 (served by home BS) (HUE), respectively. Furthermore, as described earlier, the Macro UE (MUE) 14 cannot be served by the closed subscriber group (CSG) without an explicit permission from the CSG. As a consequence the Macro UE (MUE) may be located in close proximity to the CSG-based HBS1 12. Several closed subscriber groups (CSG) may also be located in the same vicinity. There is no communication link between the CSGs. This means that Home UE (HUE) served by a first closed subscriber group CSG1 provided by HBS1, may be located very close to another closed subscriber group CSG2, provided by HBS2. In other words, a Home UE (HUE) may not be connected to the strongest HBS. These limitations give rise to the following main problems (problem scenarios) in an event when the MUE is located closer to a CSG node:

1. Macro UE (MUE) downlink (DL) reception quality is degraded due to closed subscriber group (CSG) downlink (DL) transmission to its HUE (MUE and CSG are victim and aggressor respectively), see Fig. 3.

2. Home UE (HUE) downlink (DL) reception quality is degraded due to macro network node (MN) downlink (DL) transmission to its Macro UE (MUE) (HUE and CSG are victim and aggressor respectively), see Fig. 3.

3. Closed subscriber group (CSG) uplink (UL) reception quality is degraded due to Macro UE (MUE) uplink (UL) transmission to its serving MN (CSG and MUE are victim and aggressor respectively, see Fig. 4.

4. Closed subscriber group (CSG) uplink (UL) reception quality is degraded due to Home UE (HUE) uplink (UL) transmission to its serving CSG (CSG and HUE are victim and aggressor respectively), see Fig. 4.

5. Home UE (HUE) downlink (DL) reception quality is degraded due to CSG DL transmission to its HUE (HUE and CSG are victim and aggressor respectively).

In principle the HUE uplink transmissions may also degrade the macro base station (BS) reception quality. However this scenario is less severe since HUE operates at typically lower output power. Nevertheless the technology disclosed herein may be used to mitigate or avoid the interference in all these scenarios.

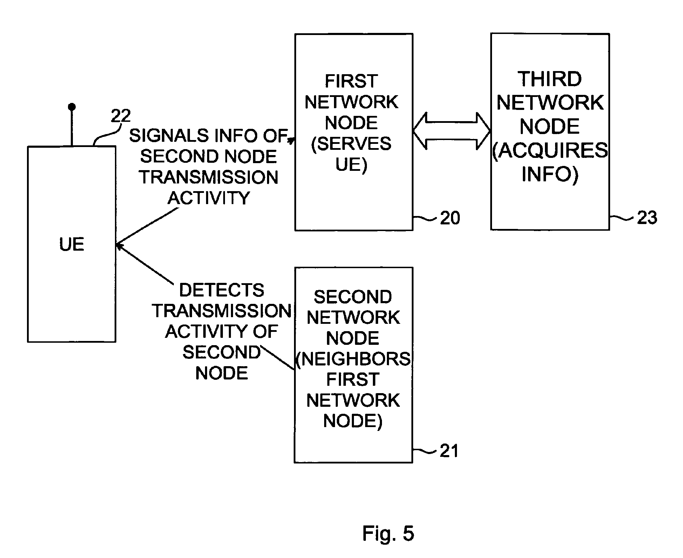

Fig. 5 both show portions of a communications network including a first user equipment unit (UE) 22; a first network node 20; a second network node 21; and a third network node 23.

Fig. 5 shows the first user equipment unit 22 communicating with the first network node 20, and how it detects the transmission activity of the second network node 21. Finally it shows that the first network node 20 communicates with the third network node 23.

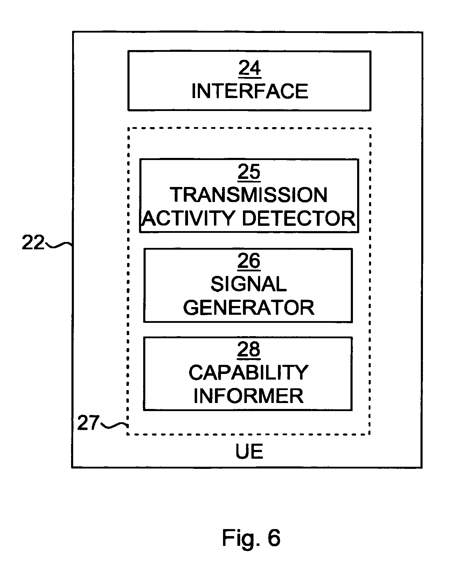

The user equipment unit (UE) 22 is illustrated in Fig. 6 as comprising a communications interface (I/F) 24 through which the user equipment unit (UE) communicates using radio frequency transmissions, both on an uplink (UL) and a downlink (DL). In an example embodiment, the user equipment unit (UE) further comprises transmission activity detector 25 and signal generator 26. The transmission activity detector 25 is configured to implicitly and/or explicitly detect the transmission activity in the second network node. Such detection may be based on a pre-determined rule or upon receiving an explicit request from its serving first network node. The signal generator is configured to signal information about the detected transmission activity to the first network node. One or more of each of the transmission activity detector and signal generator may be realized by or comprise a machine (e.g., computer or processor) platform, as hereinafter described and as generally depicted by dotted dashed lines which frames such units 25, 26 and 28 and functionalities. These entities or entity in case of all the above functions are realized by a single entity also form an interference assessment capability device 27. The interference assessment capability device 27 also comprises a capability informer 28 configured to inform about the ability to determine transmission activity. The capability informer may comprise or be connected to a transceiver and is arranged for indicating via the transceiver to the first network node that it is capable of detecting or determining the transmission activity (e.g. reading control channels) in the second network node (i.e. non-serving cell) and a unit for reporting the above capability to the first network node proactively or based upon explicit request received from the first network node. The user equipment unit (UE) 22 also comprises other units and functionalities not illustrated but known to the person skilled in the art.

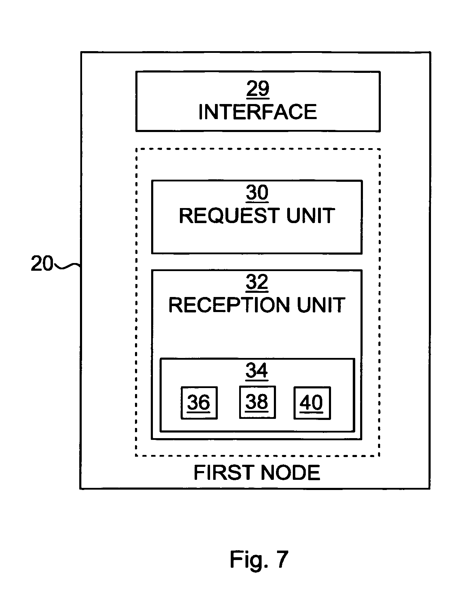

The first network node 20 is illustrated in Fig. 7 as comprising a communications interface (I/F) 29 through which the first network node communicates using radio frequency transmissions, both on an uplink (UL) and a downlink (DL), with the user equipment unit (UE). In an example embodiment, the first network node 20 further comprises a request unit 30 and a reception unit 32. The request unit 30 may be a signal generator or the like which is configured to request the user equipment unit (UE) to detect transmission activity in the second node. The reception unit 32 may be a signal processor or the like which is configured to receive the information about the detected transmission activity in the second node from the user equipment unit (UE). One or more of each of the request unit and the reception unit may be realized by or comprise a machine (e.g., computer or processor) platform, as hereinafter described and as generally depicted by dotted-dashed lines which frames such units and functionalities. The reception unit furthermore comprises a unit 34 for improving communication to and from the first base station or a communication improving element. The unit 34 here furthermore comprises a unit 36 for setting transmission parameters for communication between the first base station and the mobile station or a transmission parameter setting element, a unit 38 for setting mobile station activity parameters using the received information or mobile station parameter setting element and a unit 40 for using the data in resource planning and resource assignment strategies or a resource planning and resource assignment element.

The first network node also comprises other units and functionalities not illustrated but known to the person skilled in the art.

As mentioned above, the user equipment unit (UE) 22 and the first network node 20 may, in example embodiments, include a machine or computer platform. The terminology "platform" is a way of describing how the functional units of the user equipment unit (UE) 22 and/or the first network node 22 may be implemented or realized by machine, such as electronic circuitry. One example platform is a computer implementation wherein one or more of the framed elements, are realized by one or more processors which execute coded instructions in order to perform the various acts described herein. In such a computer implementation the user equipment unit (UE) 22 and/or the first network node 20 may comprise, in addition to a processor(s), a memory section (which in turn can comprise random access memory; read only memory; application memory (which stores, e.g., coded instructions in non-transitory form which can be executed by the processor to perform acts described herein); and any other memory such as cache memory, for example). Typically the user equipment unit 22 (UE) and/or first network node 20 also comprises other input/output units or functionalities, example representative input/output units being illustrated (for example) a keypad; an audio input device (e.g. microphone); a visual input device (e.g., camera); a visual output device (e.g., visual display unit); and an audio output device (e.g., speaker).

Other types of input/output devices can also be connected to or comprise the platforms of the user equipment unit (UE) and the first network node.

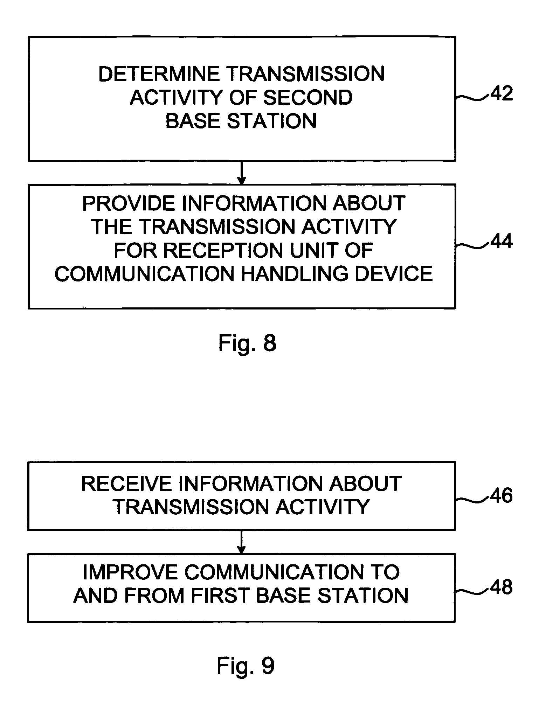

The functioning of a first embodiment of the invention will now be describe with reference being made to fig. 8 and 9, which show flow charts of method steps being performed by the interference assessment capability device 27 in the first user equipment unit 22 and by the first network node 20, respectively.

As was mentioned earlier the deployment of home base stations is often out of control of the network operator. The operator cannot take account of these and some of this is due to the home base stations lacking a direct connection to other base stations, such as lacking backhaul communication, for instance in the form of an X2 interface between a home base station and other base stations. Therefore if a user equipment unit such as the first user equipment unit 22 is in the area of the second network node 21, which may be a femto or home base station, while being served by the first network node 20, the second network node 21 may very well cause interference on the communication between the first network node 20 and the first user equipment unit 22.

In order to limit interference other measures may then have to be performed.

According to the first embodiment of the invention, the transmission activity detector 25 of the interference assessment capability device 27 determines the transmission activity of the second network node 21. This is done as the first user equipment unit 22 is being served by the first network node 20. This may be done according to two mechanisms: an explicit mechanism or an implicit mechanism, where the explicit mechanism is to measure the transmission activity, for instance through listening on communication of the second network node 21 on signalling channels used for communicating with the user equipment units served by the second network node 21. The implicit mechanism is to estimate the transmission activity. It should here be realized that transmission activity is here the activity in relation to user equipment units served by the second base station, i.e. the activity of providing traffic to and from the second network node.

Therefore, according to this first embodiment the following mechanisms can be used by the Macro UE (MUE), Home UE (HUE), or home base station (HBS) for determining the transmission activity in the second network node:

    o Explicit Mechanism: Acquisition of scheduling information by reading control channel of second network node.
    o Implicit mechanism: Interference estimation in second network node.

The determined transmission activity is then reported to the signal generator 26, which goes on and provides information about indicating the transmission activity for the reception unit 32 of the first network node 20, step 44. This may here be data defining the resources used for traffic. It may also be a measure on the level of activity in relation to the user equipment units served by the second network node 21. In this first embodiment of the invention the data is furthermore sent to the first network node using the interface 24. The information about transmission activity is then received by the reception unit 32 of the first network node 20 via the communication interface 29, step 46, and the unit 34 for improving communication to and from the first network node 20 uses the received information for communication improving. The communication improving may involve setting transmission parameters for communication between the first network node 20 and the first user equipment unit 22 based on the received information using unit 36. It may additionally or instead involve setting mobile station activity parameters based on the received information using unit 38. It may furthermore additionally or instead involve using the information in resource planning and resource assignment strategies via the unit 40.

In this way it is then possible for the first network node to consider interference caused by the second base station.

The serving network node (e.g., the first node), upon acquiring information about the activity in the second node via the UE, may use the acquired information or take into account the acquired information for performing one or more of the following tasks:

    Task 1: Appropriate setting of transmission parameters.
    Task 2: Setting of UE activity
    Task 3: Network management and planning.

The interference assessment capability device 27 may be provided in a user equipment unit served by the macro base station 10 or in the macro UE 14, in a user equipment unit 18 served by a home base station 16 or Home UE as well as in the home base station (HBS) 12 or 16 itself. It can therefore be seen that the Macro UE (MUE) 14, Home UE (HUE) 18 and also the home base station (HBS) 12 or 16 may determine the transmission activity in the second network node 21 (e.g.,. in a neighboring network node). The above nodes may furthermore use different mechanisms for determining the activity.

The term 'transmission activity' may refer to the uplink transmission by the UE to its serving node and/or downlink transmission by the serving node to its UE. Furthermore the transmission may comprise of data transmission and/or control information.

According to one example embodiment the first user equipment unit (UE) 22 may be a Macro UE (MUE) 14 served by the first node 20 which may be the macro network node 10 (e.g. macro eNode B in LTE). In the case the MUE can determine the activity in the second node 21 which may be a HBS 12 or 16 with restricted access. In principle the MUE 14 can also determine the activity in the neighboring macro network node. However the most severe and important case is the determination of the activity in the HBS with restricted access.

According to another example embodiment the UE 22 is a Home UE (HUE) 18 served by the first node 20 which is an HBS 16 with restricted access (e.g. Home eNode B or CSG in LTE). There are two variations of this embodiment. The first variation is a method in the HUE determining the activity in the second node 21 which is a neighboring macro network node; the second variation is a method in the HUE 18 determining the activity in the second node 21 which is also a HBS 12 with restricted access.

According to another example the home base station (HBS) with restricted access (e.g. Home eNode B or CSG in LTE) itself determines the transmission activity in the second node 21. There may here be two variations. A first variation is when the first network node 20 in the form of the home base station (HBS) 12 determines the activity in the second node 21 which is a neighboring macro network node 10; a second variation is when the first network node 20 in the form of the HBS 16 determines the activity in the second node 21 which is another HBS 12 with restricted access.

Typically the home base station (HBS) has a measurement unit which mimics a UE and is thus capable of performing measurements which are similar to the UE measurements. Hence the same measurement unit in the HBS can also be used with some additional circuitry for detecting the transmission activity in the second node (e.g. macro node or another HBS).

As can be seen it is here possible that the first network node 20 is itself able to make the investigations. It may thus itself comprise the interference assessment capability device 27, which is especially the case if the first network node 20 is a home base station, in which case it essentially comprises a mobile phone as mentioned above. In this case the interference assessment capability device 27 would communicate with the request unit 30 and reception unit 32 internally within the first network node 20. The first network node 20 may thus be a base station. However, it may also be a node in the network handling communication for a base station, such as an RNC. In this case the first user equipment unit may send the information to the first network node 20 via a corresponding base station forming a cell in which the interference is experienced.

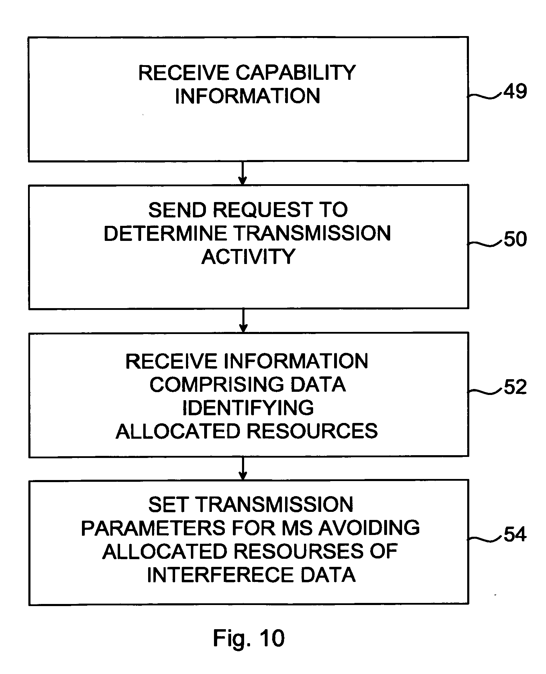

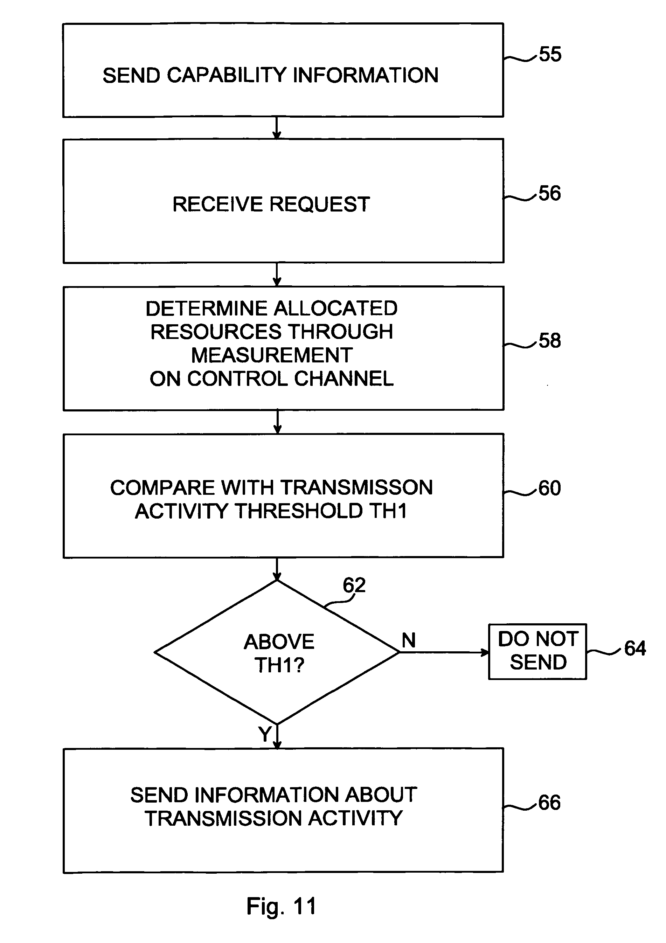

Now a second more detailed embodiment of the invention will be described with reference being made to fig. 10 and 11, where fig. 10 shows a flow chart of a number of method steps being performed in a serving base station forming the first network node 20 and fig. 11 shows a flow chart of a number of further method steps being performed in the first user equipment unit 22 comprising the interference assessment capable device 27.

All UEs may not be capable of detecting or determining or measuring the transmission activity in the non-serving cell. Therefore in order to avoid unnecessary signaling the network may request the UE to determine the transmission activity only if it is capable of determining the transmission activity in the non-serving cell.

In this second embodiment the capability informer 28 of a user equipment unit 22 that is provided with an interference assessment capability device 27 therefore reports, via interface 24, the fact that it has this capability to the first network node 20 serving it. The interference assessment capable device 27 of the first user equipment unit 22 therefore sends capability information, step 55, which capability information indicates that it has the capability to determine the transmission activity of the second network node in relation to user equipment units serviced by this second network node. This can also be seen as the interference assessment capability device indicates that it has the capability to assess the interference caused by a neighbouring node, the second network node 21. The information therefore also indicates that the interference capability assessment device is capable of determining the transmission activity of the signals transmitted by the second non-serving network node. It should here be realized that the capability information may comprise more data than this capability indication, such as data about type of channel on which the activity may be determined.

According to this second embodiment the UE 22 thus reports its capability to the network node that it is capable of detecting or determining or measuring the transmission activity (e.g. reading control channels or can implicitly determine) in the second network node (i.e. non-serving cell). The UE capability may also contain additional information or can indicate the limitation in terms of determining the transmission activity in the second node 21. It may thus send additional or circumstantial data setting out circumstances during which it is able to perform transmission activity determination. The additional data may comprise conditions under which the first user equipment unit is able to perform transmission activity determination of the second network node in relation to user equipment units served by it. It may also comprise data about one or more channels which the first user equipment unit is able to use for performing transmission activity determination of the second network node in relation to user equipment units served by it, for instance by only receiving PDCCH. A few examples are given below:

- For example the UE 22 may indicate that it is capable of detecting or determining or measuring the transmission activity by reading only certain specific control channel, e.g. Physical Downlink Control CHannel (PDCCH).
- The UE may also indicate that it is capable of detecting or determining or measuring the transmission activity only when it does not receive data from the first node (i.e. serving node).
- The UE may also indicate that it is capable of detecting or determining or measuring the transmission activity only by implicit or explicit or by both mechanisms.
- The UE 22 may also indicate that it is capable of detecting or determining or measuring the transmission activity when operating in single carrier mode or when operating in multi-carrier mode or in both modes.

The UE 22 may also indicate that it is capable of detecting or determining or measuring the transmission activity when operating in a specific type of carrier aggregation mode e.g. in inter-band CA. This is because such a UE has two independent receiver chains; the second one can be used for determining the transmission activity.

The UE 22 may report any of the above mention capability or associated information to any of the above mentioned network node in any of the following manner:

- Proactive reporting without receiving any explicit request from the network node
- Reporting upon receiving any explicit request from the network node

In case of proactive reporting the UE may report its capability during one or more of the following occasions:

- During initial setup or call setup e.g. when establishing a Radio Resource Control (RRC) connection

- During cell change e.g. handover, change of primary cell in case of CA, change of primary CC in case of CA, RRC re-establishment, RRC connection release with re-direction etc.

- Periodic reporting

The capability information is then received by the request unit 30 of the first network node 20, step 49. The request unit 30 may then send a request to determine the transmission activity to the first user equipment unit 22, step 50. The UE may here be requested to acquire the transmission activity in the second node 21 according to its supported capability. If UE 22 supports more than one way to determine the transmission activity in the second node, then the first network node 20 may request UE 22 to determine the transmission activity by using a specific means.

The first network node 20 may here furthermore send a request based on finding out that the first user equipment unit 22 as well as perhaps other user equipment units which it serves have problems in communicating with it, for instance through detecting that unusually high power levels are needed despite no known neighbouring base stations interfering the resources allocated to such served user equipment units. The first network node 20 may furthermore only send such a request to a user equipment unit having announced that it has such a capability.

The method of receiving the capability information can also be implemented in a test system which comprises of at least test equipment (TE) node (aka system simulator (SS). The test system can use this for testing purposes for verifying that UE supports this feature / capability of frequency specific autonomous gaps for SI reading. For example the test can be a signaling / protocol / procedure test case or a performance / Radio Resource Management (RRM) test case to verify the UE capability.

The signaling of capability to any of the above network node can be done using any suitable protocols such as RRC, LTE Positioning Protocol (LPP) etc.

The request is then received by the transmission activity detector 25 of the first user equipment unit 22, step 56. The transmission activity detector 25 then proceeds and determines the allocated resources of the second base station using the explicit mechanism, i.e. through measuring on control channels of this second network node, step 58. It may here first learn about which control channels are used through listening on a paging channel for finding where control channels are provided and then listen on these control channels in order to find out what resources are allocated to the user equipment units served by the second network node. The control channels which are to be monitored may also be specified in the capability information.

In this exemplifying embodiment the UE (MUE or HUE) or HBS may thus read the second node's control channel carrying scheduling information. The scheduling information in turn depicts the transmission of resources in the uplink or downlink for serving the UE in a cell. Thus the acquired scheduling information enables the UE or HBS to explicitly determine the uplink and/or downlink transmission activity in the second node (i.e. in a neighboring node). In LTE heterogeneous network the UE 22 can acquire this information by reading a physical downlink control channel (PDCCH) of the neighboring node as elaborated below. In order to read the control channel of the second node the UE 22 needs to first know about the basic transmission parameters used in the second node e.g. transmission bandwidth, physical resources over which the control channels are sent, number of transmit antennas over which the control channels are transmitted etc. These basic transmission parameters can be acquired by reading the part of the system information of the second node 21. The UE 22 is able to read the system information of the neighboring base station. For example in LTE and HSPA the UE 22 is able to read the master information block (MIB) and relevant system information blocks (SIBs) of the neighboring BS.

The network node is also known to assign the uplink and/or downlink radio resources to the UEs under its control. These resources are assigned by the serving node by sending the scheduling grants for uplink or downlink allocation over a suitable downlink control channel. For example in LTE the resources are assigned to the UEs via downlink control channel termed as PDCCH. The assigned resources enable the UE 22 to receive the data and/or other relevant information over the assigned resources e.g. resource blocks and resource elements within the assigned resource blocks. In response the UE is able to receive the transmission on the downlink data channel called physical downlink shared channel (PDSCH) or transmit on the uplink data channel called as physical uplink shared channel (PUSCH). In HSPA the resources are assigned to the UE via downlink control channel called as high speed control channel (HSCCH).

The first user equipment unit 22 is thus able to gather this information about the assigned resources.

Thereafter the signal generator 26 of the first user equipment unit 22 may compare the amount of resources with a transmission activity threshold TH1, and if this threshold is not exceeded, i.e. if the transmission activity is not above the threshold TH1, then information is not sent, step 64. This may involve comparing the assigned resources, such as assigned resource blocks with a discrete resource block threshold and communicating with the first network node 20 if this threshold is exceeded.

However, if the transmission activity is above the threshold TH1, step 62, then the signal generator 26 generates a signal comprising information about the transmission activity, which signal is then sent to the first network node via the interface 24, step 66. It can thus be seen that comprising the transmission activity with is compared with a transmission activity threshold and information about the transmission activity is only allowed to be provided to the reception unit 32 of the first network node 20 if the transmission activity is above the transmission activity threshold TH1.

The UE 22 may thus send the detected activity information to its first node only when the activity level is above the threshold. For example the UE 22 may send the information if at least K resource blocks are scheduled in UL and/or DL in a certain time period, e.g. L Transmission Time Intervals (TTI), where $L \geq 1$.

The information may here comprise data identifying the actual assigned resources. It may additionally or instead comprise more general activity level data, indicating if the second network node operators at a low, medium or high activity level. This general activity level data is a transmission activity indicator indicating the transmission activity or a transmission activity level. Such levels may also be obtained through comparing the assigned resources, such as assigned resource blocks with corresponding thresholds. Here it is possible that the first threshold used for determining of the sending of information may be the same as one of these activity thresholds and for instance the same as the low activity threshold.

The UE 22 may thus also encode the acquired activity information in certain discrete levels e.g. low, medium and high. Hence instead of reporting the detailed activity information, the UE may report only these discrete levels. This leads to reduction in the signaling overheads. The low activity level would mean that either no or very few resources (e.g. resource blocks in LTE) are allocated by the second node to its UE. The encoding of the determined activity in discrete levels can be performed independently on the DL and UL. The UE 22 (MUE or HUE) can thus either send the acquired scheduling information to its serving node transparently (i.e. without interpreting) or non-transparently (i.e. by decoding, interpreting and encoding again) to its serving node.

It should also be noted that the UE can determine whether the second node 21 is an HBS or not. The UE can read the system information to acquire a cell global identifier and/or CSG indicator of the second node to uniquely determine whether the node is a HBS and a HBS with restricted access (i.e. CSG). In LTE the UE 22 can read the Master Information Block (MIB) and System Information Block (SIB) to acquire the Cell Global Identifier (CGI) of the second node.

The reception unit 32 of the first network node 20 then receives the information as allocated resources via the communication interface 29, step 52, and forwards it internally to the unit 34 for improving communication to and from the first network node and more particularly to the unit 36 for setting transmission parameters for communication between the first network node 20 and the first user equipment unit 22 . The unit 36 may here ensure that the resources allocated by the second network node 21 are being used also by the first network node 20. The first network node 20 may more particularly ensure that the frequencies used by the second network node 21 are avoided.

This may be used for reducing interference caused by the second network node 21 on the communication between the first network node 20 and the first user equipment unit 22.

The term transmission parameter in this context refers to the assignment or scheduling of resources by the first node 20 to its user equipment unit (UE) 22.

In some sense the appropriate selection of the parameters could be regarded as smart scheduling whereby the collision or overlapping of downlink transmissions of signals between the macro and HBS or between HBSs are avoided or minimized. Similarly the smart uplink scheduling can also avoid or minimize the collision or overlapping of uplink transmissions between the MUE and HUE. This in turn leads to better signal quality at the receiver of the victim. The selection of parameters to avoid collisions is elaborated with the following examples.

For example if first node is macro node then it may assign its MUE the resources which don't collide or overlap in time or frequency with those assigned by the second node. In another example the macro node may assign resources to its MUE only when no or minimal activity is detected in the second node. In another example the macro node may assign the resources using more robust modulation and/or coding when the detected activity in the second node is high or moderate. Similar actions can be taken by the serving HBS when assigning resources to its HUE.

Even though resources assigned for one TTI are not possible to take account for directly, but only for later TTIs, this approach of reducing interference is still effective. This is due to the fact that resources may be assigned for longer duration for user equipment units served by the second network node, for instance voice communication and file download operations. It is then also possible to take the periodicity of the communication in account, for instance the periodicity of voice communication thus avoid assigning resources according to the periodicity of the assigned type of communication.

Furthermore the first network node 20 may also apply such interference reduction measures also on other mobile stations being served, for instance other mobile stations in the same area as the first user equipment unit. These other mobile stations may then be mobile stations lacking the ability to obtain transmission activity data from a neighbour network node.

It is possible that the method in the first network node according to the second embodiment comprises:

- requesting the UE 22 to report its capability to indicate whether the UE is capable of detecting or determining the transmission activity (e.g. capable of reading control channels) in the second network node (i.e. non-serving cell).
- receiving the above UE capability information from the UE in response to a request or proactively sent by the UE, and
- configuring the UE to determine the transmission activity in the second network node based on the received UE capability information.

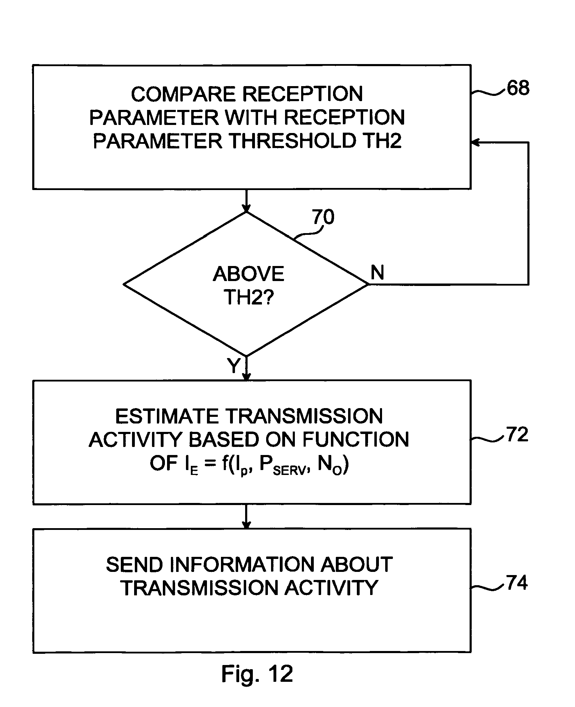

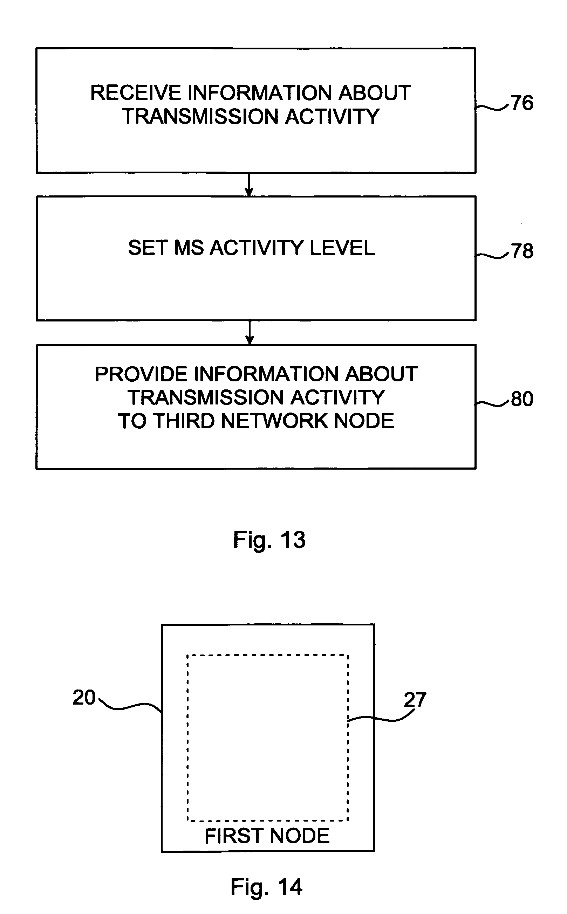

Now a third embodiment of the invention will be described with reference being made to fig. 12 and 13.

Here the first user equipment unit does not send information based on receiving a request, but instead sends information triggered by a determination of a determination initiating condition being fulfilled.

Any of the HUE, MUE or HBS can initiate procedure for performing the determining of the transmission activity in the second network node 21 when certain condition(s) is met. The conditions or criteria can be predetermined. The thresholds and associated parameters can also be pre-determined or configured or signaled by the first network node 20. Alternatively the thresholds and parameters can also be determined by the UE or HBS themselves and can thus be implementation specific. Furthermore each criterion may also be linked to specific mechanism (e.g. explicit or implicit mechanism or both) for determining the activity. For example only explicit mechanism can be used for determining the uplink activity. Alternatively all possible mechanisms can be used for determining the activity. Yet the exact mechanism to determine the activity can be decided by the UE or home base station (HBS) themselves. The mechanism to be used may also be configured by the network though the criteria as described below could still be pre-determined.

Examples of pre-determined triggering criteria are:

- MUE DL reception quality falls below a threshold: For example if DL Block Error Rate (BLER) of DL channel received by the MUE from its serving macro node exceeds a threshold, the MUE may start determining the activity in a neighboring HBS with restricted access. The activity can be determined in more than one HBS e.g. N strongest HBS. The strongest HBS can be determined based on prior art measurements such as signal strength, e.g. Reference Signal Received Power (RSRP), and/or signal quality, e.g. Reference Signal Received Quality (RSRQ).

- HUE DL reception quality falls below a threshold: For example if DL BLER of DL channel received by the HUE from its serving HBS exceeds a threshold, the HUE may start determining the activity in a neighboring HBS with restricted access and/or in macro node. The activity can be determined in more than one HBS and/or macro node e.g. N strongest HBS and/or macro node. The serving HBS may also become aware of this condition based on its HUE feedback and/or measurement reports. Hence this condition may also trigger the serving HBS to start determining the activity in a neighboring HBS with restricted access and/or in macro node.

- MUE UL transmission power exceeds a threshold: For example if the MUE transmit power exceeds a threshold it may start determining the activity in a neighboring HBS with restricted access. The activity can be determined in more than one HBS e.g. N strongest HBS. Under this condition the determination of the HUE transmission to its serving HBS is important because the interference generated by theMUE high output power could significantly degrade the reception quality of HUE transmission.

- HUE UL transmission power exceeds a threshold: For example if the HUE output power exceeds a threshold it may start determining the activity in another HBS with restricted access or in N strongest HBS.

- Periodic activity determination: According to this rule the UE or HBS may be required to periodically check the transmission activity in the second node. The period (T1) and the duration ($\Delta$T2) over which the activity is to be checked can be predetermined values or can be configured by the first network node or implementation specific.

The condition can thus be that a certain time has been reached. The transmission activity detector may thus be set to determine the transmission activity of the second network node on a regular basis i.e. on periodically recurring time intervals. In this third embodiment the condition is another condition though and that is that a reception parameter exceeding or crossing a corresponding reception parameter threshold, where the reception parameter may be reception quality. The transmission activity detector thus received signals and determines and compares the received signals with a reception parameter threshold, TH2, step 68. If then the threshold is not crossed, step 70, then comparison is continued, while if the threshold TH2 is crossed, step 70, for instance through the reception parameter being above the threshold, then the transmission activity detector 25 determines the transmission activity of the second network node 21. It can thus be seen that the determining of the transmission activity is triggered by the crossing of the threshold.

In this third embodiment the transmission activity is determined implicitly through an estimation being made in the transmission activity detector 25, step 72.

This method implicitly enables the MUE, HUE or HBS to determine the downlink transmission in the second node by estimating the interference. The determined interference originating from the second node can be mapped to the downlink transmission activity in the second node.

The estimation is thus an estimation based on interference experienced by the interference assessment capable device. The activity may more particularly be estimated as a function of total received power, signal strength of the first network node and experienced noise, where the total received power is the total power received by the first user equipment unit 22 and noise experienced by this unit.

The interference may furthermore be estimated based on a function or general expression

$$I_{Effective} = f(I_P, P_{serv}, N_0), \text{ step } 72.$$

where, $I_P$ is the total received power measured by the first user equipment unit 22, here exemplified by an MUE, $P_{serv}$ is the signal strength of the macro node pilot or reference signal measured by the MUE and $N_0$ is the noise in the MUE receiver.

As an example, the above general function can be used by the Macro UE (MUE) to derive the activity in the second node 21 by using the following activities:

Activity 1: Measuring the total received power ($I_P$) over certain number of physical channels in a given certain Bandwidth (BW) (e.g. over all resource elements in certain number of resource blocks in LTE) over certain time (e.g. over 1 or more TTI).

Activity 2: Measuring the signal strength of pilot or reference signal ($P_{serv}$ e.g. RSRP in LTE) from the first node (i.e. serving macro node) over the same BW, physical channel and time period used for the estimation of $I_P$ in Activity 1.

Activity 3: Subtracting the following two quantities from the total received interference ($I_P$) obtained in Activity 1: (a) serving macro node measured signal strength (Pserv e.g. RSRP) obtained in Activity 2; and (b) thermal noise or any other internal noise (NO) in the MUE receiver.

The determined quantity or the so-called activity level estimated using the above steps can be expressed as the effective interference ($I_{Effective}$) from the second node, e.g.,

$$I_{Effective} = I_P - P_{serv} - N_0$$

The larger value of the effective interference ($I_{Effective}$) corresponds to higher level of downlink transmission activity in the neighboring second node and vice versa. The determined effective interference can further be mapped into discrete levels e.g. low activity, medium activity, high activity etc. The mapping can be done by the MUE and in which the Macro UE (MUE) will report the discrete activity level to the first network node. Alternatively the mapping can be done by the first node in which case the MUE shall report the effective interference. The latter approach provides more accurate information to the first node about the activity but also involves more signaling overheads.

Also here it is thus possible that various levels are provided, such as low, high and medium. The level data may then be sent either together with the estimated power or instead of the estimated power as information about the transmission activity, step 74. In this embodiment it is only sent as level data.

The information about transmission activity is then received by the reception unit 32 of the first network node 20 via the interface 29, step 76. The information is more particularly received by the unit 38 for setting mobile station activity parameters based on the received information of the unit 34 for improving communication to and from the first network node.

This unit 38 may set Discontinuous Transmission (DTX) parameters and /or Discontinuous Reception (DRX) such as sleep mode parameters based on the indicators may be set in order to reduce interference.

By UE activity we mean the DRX and/or DTX level of the UE. According to this embodiment the first node may adjust the UE activity level in the uplink and/or downlink depending upon the acquired information about the transmission level in the second node. This is further elaborated with examples:

For example if the downlink transmission activity in the second node is high then the first node may move the UE into DRX or extend the DRX cycle of the UE if already in DRX state. This will enable the UE to save its power since in this situation the first node is not likely to schedule the UE in the downlink. Similarly if the uplink transmission activity in the second node is high then the first node may move the UE in DTX mode or extend the DTX cycle of the UE. This will reduce the uplink interference from the UE towards the victim second node.

The first node 20 may restore the DRX and/or DTX states of the UE to the normal levels when the transmission activity in the second node 21 falls below threshold e.g. low or negligible or non-existent.

In this third embodiment, the reception unit 32 furthermore also provides the information to the third node 23, step 80, in order to be used in network planning.

The third node 23 may collect the statistics about the transmission activities from multiple first nodes. Based on this statistics the third node can determine the areas with coverage holes or areas with poor coverage in the uplink and downlink. The determined coverage information can be used for improving the network planning and resource assignment strategy. This mechanism may also provide recommendation in terms of number of HBS which could be active at the same time in the same location.

According to this third embodiment and mode the acquired information about the transmission activity in the second node 21 can be utilized by the network for performing network planning and management tasks. These tasks can be performed by the third network node. Examples of third network nodes are OSS, O&M, SON, RNC, BS, Node B, eNode B, core network node, etc.

It can be seen that as a special case when the network planning and management are done also by the radio network node such as eNode B in LTE then the first node and the third node may be the same. In other cases however the first node which acquires the transmission activity information may signal the acquired information to the third node. The first node may also signal the acquired information to a further node e.g. macro eNode may signal this to the neighboring macro eNode B over X2 interface in LTE. The acquired information may also be used for resource partitioning between different layers in heterogeneous network in case the resource partitioning is used. The acquired information may also be used for recommending the values of the transmission parameters in certain location or coverage areas in a heterogeneous network e.g. maximum output power of different nodes and/or devices; examples are max output power of the macro BS, MUE, HUE, HBS etc. The recommended values of the parameters can be signaled by the third node to the first node. The first node in turn may use the recommended parameter values for the operation.

It should here further be realized that it is possible that instead of sending this data to the third node, the unit 40 may use the information itself in resource planning and resource assignment strategies.

The invention has a number of advantages.

One advantage of the technology disclosed herein is to mitigate the interference in (but not limited to) at least the following scenarios in the heterogeneous network comprising at least one home BS with restricted access and one macro network node

(MN):

- MUE victim - HBS aggressor: MUE DL reception under interference due to DL transmission from HBS to its HUE
- HUE victim - MN aggressor: HUE DL reception under interference due to macro DL transmission to its MUE
- HBS victim - MUE aggressor: HBS UL reception under interference due to MUE UL transmission to its serving MN
- HUE victim - HBS aggressor: HBS DL reception under interference due to DL transmission from neighboring HBS
- HBS victim - HUE aggressor: HBS UL reception under interference due to UL transmission from the HUE served by the neighboring HBS

The above advantage of mitigating the interference in the above or similar scenarios is achieved, e.g., by:

◦ The user equipment unit (UE) detecting the activity in the second node (e.g. neighboring HBS, neighboring macro eNB)
◦ The first network node (e.g. serving macro eNB or serving HBS) via the UE (e.g. MUE, HUE) acquiring the detected information about the activity in the second network node (e.g. neighboring HBS, neighboring macro eNB)
◦ The first network node taking into account the acquired activity information when scheduling one or more UEs
◦ The first network node may also send the acquired information to the third node which in turn may use the received information for network management and planning purposes.
◦ Combined scheme: acquisition of scheduling information and interference estimation.

The invention also has a number of further advantages. The technology disclosed herein enables mitigation of interference towards the victim receiver from the aggressor transmitter in a number of heterogeneous network scenarios. More specifically the interference is avoided or reduced in the following example scenarios:

- The macro node can prevent or minimize the degradation of the DL reception quality of the victim MUE from the aggressor HBS with restricted access.
- The macro node can prevent or minimize the degradation of the UL reception quality due to the transmission from the aggressor HBS with restricted access.
- The HBS with restricted access can prevent or minimize the degradation of the DL reception quality of the victim HUE from another aggressor HBS with restricted access.

Moreover, the technology disclosed herein also allows the network to use the transmission activity of different types of nodes in heterogeneous network to improve the network planning and coverage.

There are a number of variations that are possible to make of the present invention.

The above method for implicitly determining the activity can also be performed in the macro node. In this case the MUE can report the measurements (i.e. second node's Ip, serving node RSRP, etc) to the serving macro node. The macro node can use the received measurements for determining the activity in the second node (e.g. in HBS).

The principles and the steps for determining the activity can also be used by the HUE to determine the DL transmission activity in the second node. In this case the second node can be another HBS or the macro node. Similarly the HUE can report either the determined effective interference or the discrete activity level in the second node (HBS and/or macro node) to its serving HBS.

The HBS (first node) can also use the similar principles as described above to implicitly determine the activity in neighboring HBS (second node) by eliminating its own HUE reporting signal strength (e.g. RSRP) and the internal noise of HBS (first node) from the total interference measured in a neighboring HBS (second node).

It is furthermore possible with a combined scheme using both acquisition of scheduling information and interference estimation in second node.

This mechanism is the combination of both explicit and implicit mechanisms described earlier. For example in one embodiment the MUE and the HUE always use both mechanisms to determine the activity in the second node. According to another embodiment the UE initially uses only one of the mechanisms. It initiates the second mechanism in case the activity is detected by the first mechanism. Hence the second mechanism is used to confirm or verify the activity in the second node. The second mechanism is useful in reducing the complexity since the two mechanisms are generally executed in series.

It is also possible to vary the way conditions for triggering transmission activity detection in second node are used.

The MUE, HUE or HBS measurement unit can initiate the detection of the transmission activity in the second node triggered by pre-determined rules or upon explicit request from first node.

Regardless of the triggering conditions for initiating the activity detection, the UE (MUE or HUE) or HBS measurement unit may be requested to report the detected activity associated information to its serving node (i.e. first node).

The first node may explicitly request the UE or HBS measurement unit to determine the transmission activity in the second node. The first network node can be a macro node or HBS. In both cases the request may need to be sent by the first node to the UE (i.e. MUE or HUE) via signaling means e.g. Radio Resource Control (RRC) signaling, Medium Access Control (MAC) signaling etc. The first node may also provide additional information to the UE or HBS measurement unit such as the time over which the transmission activity should be determined in the second network node. The first node may also indicate the mechanism i.e. explicit, implicit or both) to be used for determining the activity. The first node may also indicate whether the transmission activity is to be determined for the uplink and/or for the downlink. The first node may request the UE or HBS measurement unit to detect the activity periodically or when specific conditions are met. For examples if the first node detects that any of the pre-determined conditions described in the previous sections occur then the first node may send requests to the UE or HBS for determining the activity in the second node. Consider that serving macro node identifies poor downlink reception quality of its MUE. In response the serving macro node (i.e. first node) requests the MUE to determine the DL activity in the strongest HBS (i.e. second node) by reading the scheduling information sent by this HBS to its HUE.

Some aspects specific to the type of the first node are described for the following two cases:

Case 1: First node is macro node: When first node is the macro node (e.g. macro eNode B) the MUE may be requested to determine the transmission activity in the neighboring HBS. Typically the MUE may be requested to determine the activity in the strongest HBS. The MUE may also be requested to determine the activity in a particular HBS whose identifier is provided by the first network node. The MUE may also be requested to determine the activity in more than one HBS e.g. in N strongest HBS or in M HBS whose identifiers are provided by the first node. As described earlier the strongest HBS can be determined based on prior art measurements such as signal strength, e.g. RSRP in LTE or Common Pilot Indicator Channel (CPICH) Received Signal Code Power (RSCP) in HSPA and/or signal quality, e.g. RSRQ in LTE or Common Pilot Indicator Channel Energy per chip to noise ratio (CPICH Ec/No) in HSPA.

Case 2: First node is HBS: When first node is the HBS with restricted access (e.g. CSG) the HUE is requested to determine the transmission activity in the second node which can be a neighboring HBS and/or a macro node (e.g. macro eNode B). Like in previous case the HUE may be requested to determine the uplink and/or downlink transmission activity of the strongest or N strongest neighboring HBS and/or macro node. The HUE may also be requested to determine the activity in the HBS and/or macro nodes whose identifiers are provided. In addition the HBS itself may also determine the activity in the second node (i.e. another HBS and/or macro node). In this case the request is sent internally to the measurement unit located in the first node. The mechanism to be used by the HUE or by the HBS itself for detecting the activity can be configured by the first node.

As mentioned earlier the interference assessment capable device may be provided in the first network node. Fig. 14 is a diagrammatic view of such a first network node 20 comprising an interference assessment capable device 27.

Although the description above contains many specificities, these should not be construed as limiting the scope of the invention but as merely providing illustrations of some of the presently preferred embodiments of this invention. It will be appreciated that the scope of the present invention is defined by the appended claims.

## Claims

1. An interference assessment capable device (27) for investigating interference in a heterogeneous mobile communication system, the system comprising a first network node (20) serving a first user equipment unit (22) and comprising a second network node (21) causing interference on communication between the first network node and the first user equipment unit, the first and second network nodes lacking backhaul communication between each other, the interference assessment capable device comprising a transmission activity detector (25) configured to determine the transmission activity of the second network node by reading a downlink control channel of the second network node, thereby detecting the resources assigned for communication between the second network node and user equipment units served by it, and a signal generator (26) configured to provide information about said transmission activity to a reception unit (32) of the first network node, wherein the information comprises data identifying the detected resources, in order to allow the information to be used in improving communication to and from the first network node.

2. The interference assessment capable device (27) according to claim 1, wherein the transmission activity detector when determining the transmission activity of the second network node is configured to determine at least one transmission activity indicator based on the determined transmission activity, where said information comprises said transmission activity indicator.

3. The interference assessment capable device according to claim 1 or 2, wherein the transmission activity detector is further configured to determine the transmission activity triggered by a determination initiating condition.

4. The interference assessment capable device according to claim 3, wherein the determination initiation condition is a reception parameter exceeding a corresponding reception parameter threshold (TH2).

5. The interference assessment capable device according to claim 3, wherein the determination initiation condition is the reaching of a point in time at which the transmission activity is to be determined.

6. The interference assessment capable device according to any of claims 1 - 5, wherein the transmission activity detector when determining the transmission activity is configured to estimate the transmission activity based on experienced interference.

7. The interference assessment capable device according to claim 6, wherein the transmission activity is estimated as a function of total received power, signal strength of the first network node and experienced noise.

8. The interference assessment capable device according to claim 7, wherein the estimated transmission activity is obtained as the total received power minus the signal strength and noise.

9. The interference assessment capable device according to any previous claim, wherein the transmission activity detector when determining the transmission activity of the second network node is further configured to compare the transmission activity with a transmission activity threshold (TH1) and only allow the signal generator to provide the information if the transmission activity is above the transmission activity threshold.

10. The interference assessment capable device according to any previous claim, wherein the interference assessment capable device is comprised in the first user equipment unit being served by the first network node and further comprising a communication interface (24) for sending the information to the first network node.

11. The interference assessment capable device according to claim 10, wherein the transmission activity detector is configured to receive a request to perform transmission activity determination from the first network node and determine the transmission activity based on the request.

12. The interference assessment capable device according to claim 10 or 11, further comprising a capability informer (28) configured to send a capability information to the first network node, which capability information indicates that said device is capable of determining the transmission activity of the second network node in relation to user equipment units served by it.

13. The interference assessment capable device according to claim 12, wherein the capability information is accompanied by additional data indicating one or more of:

conditions under which the first user equipment unit is able to perform transmission activity determination of the second network node in relation to user equipment units served by it, and
one or more channels which the first user equipment unit is able to use for performing transmission activity determination of the second network node in relation to user equipment units served by it.

14. The interference assessment capable device according to any of claims 10 - 13, where the transmission activity detector is implemented through the second of two independent receiver chains.

15. The interference assessment capable device according to any of claims 1 - 9, wherein the interference assessment capable device is comprised in the first network node (20) and further comprising a unit (34) for improving communication to and from the first network node using the transmission activity data.

16. The interference assessment capable device according to claim 15, wherein the transmission activity detector (25) comprises a measurement unit which mimics a user equipment unit.

17. A method for investigating interference in a heterogeneous mobile communication system, the system comprising a first network node (20) serving a first user equipment unit (22) and comprising a second network node (21) causing interference on communication between the first network node and the first user equipment unit, where the first and second network nodes lack backhaul communication between each other, the method being performed in an interference assessment capable device (27) and comprising:

determining (42; 58; 72), by the transmission activity detector, the transmission activity of the second network node by reading a downlink control channel of the second network node, thereby detecting the resources assigned for communication between the second network node and user equipment units served by it, and
providing (44; 66; 74) information about said transmission activity to a reception unit (32) of the first network node, wherein the information comprises data identifying the detected resources, in order to allow the information to be used in improving communication to and from the first network node.

**Patentansprüche**

1. Störungsbeurteilungsfähige Vorrichtung (27) zum Untersuchen von Störung in einem heterogenen Mobilkommunikationssystem, wobei das System einen ersten Netzwerkknoten (20) umfasst, der eine erste Teilnehmereinrichtungseinheit (22) versorgt, und einen zweiten Netzwerkknoten (21) umfasst, der Störung an der Kommunikation zwischen dem ersten Netzwerkknoten und der ersten Teilnehmereinrichtungseinheit verursacht, wobei es den ersten und zweiten Netzwerkknoten an Anbindungskommunikation untereinander mangelt, wobei die störungsbeurteilungsfähige Vorrichtung umfasst:

einen Übertragungsaktivitätsermittler (25), der dafür konfiguriert ist, die Übertragungsaktivität des zweiten Netzwerkknotens durch Lesen eines Abwärtsstreckensteuerkanals des zweiten Netzwerkknotens zu bestimmen, wodurch die für die Kommunikation zwischen dem zweiten Netzwerkknoten und den durch ihn versorgten Teilnehmereinrichtungseinheiten zugewiesenen Ressourcen ermittelt werden, und

einen Signalgenerator (26), der dafür konfiguriert ist, Information über die Übertragungsaktivität einer Empfangseinheit (32) des ersten Netzwerkknotens bereitzustellen, worin die Information Daten umfasst, welche die ermittelten Ressourcen angeben, um zu ermöglichen, dass die Information beim Verbessern der Kommunikation zum und vom ersten Netzwerkknoten verwendet wird.

2. Störungsbeurteilungsfähige Vorrichtung (27) nach Anspruch 1, worin der Übertragungsaktivitätsermittler dafür konfiguriert ist, wenn er die Übertragungsaktivität des zweiten Netzwerkknotens bestimmt, auf der Grundlage der bestimmten Übertragungsaktivität mindestens einen Übertragungsaktivitätsindikator zu bestimmen, wobei die Information den Übertragungsaktivitätsindikator umfasst.

3. Störungsbeurteilungsfähige Vorrichtung nach Anspruch 1 oder 2, worin der Übertragungsaktivitätsermittler ferner dafür konfiguriert ist, die Übertragungsaktivität zu bestimmen, die durch eine bestimmungsveranlassende Bedingung ausgelöst wird.

4. Störungsbeurteilungsfähige Vorrichtung nach Anspruch 3, worin die bestimmungsveranlassende Bedingung ist, dass ein Empfangsparameter einen entsprechenden Empfangsparameterschwellwert (TH2) überschreitet.

5. Störungsbeurteilungsfähige Vorrichtung nach Anspruch 3, worin die bestimmungsveranlassende Bedingung das Erreichen eines Zeitpunkts ist, zu dem die Übertragungsaktivität zu bestimmen ist.

6. Störungsbeurteilungsfähige Vorrichtung nach Anspruch 1 bis 5, worin der Übertragungsaktivitätsermittler dafür konfiguriert ist, wenn er die Übertragungsaktivität bestimmt, die Übertragungsaktivität auf der Grundlage der erfahrenen Störung zu schätzen.

7. Störungsbeurteilungsfähige Vorrichtung nach Anspruch 6, worin die Übertragungsaktivität als Funktion der Gesamtempfangsleistung, der Signalstärke des ersten Netzwerkknotens und des erfahrenen Rauschens geschätzt wird.

8. Störungsbeurteilungsfähige Vorrichtung nach Anspruch 7, worin die geschätzte Übertragungsaktivität als die Gesamtempfangsleistung minus die Signalstärke und das Rauschen erhalten wird.

9. Störungsbeurteilungsfähige Vorrichtung nach einem der vorhergehenden Ansprüche, worin der Übertragungsaktivitätsermittler ferner dafür konfiguriert ist, wenn er die Übertragungsaktivität des zweiten Netzwerkknotens bestimmt, die Übertragungsaktivität mit einem Übertragungsaktivitätsschwellwert (TH1) zu vergleichen und dem Signalgenerator nur dann zu gestatten, die Information bereitzustellen, wenn die Übertragungsaktivität über dem Übertragungsaktivitätsschwellwert liegt.

10. Störungsbeurteilungsfähige Vorrichtung nach einem der vorhergehenden Ansprüche, worin die störungsbeurteilungsfähige Vorrichtung in die durch den ersten Netzwerkknoten versorgte erste Teilnehmereinrichtungseinheit einbezogen ist und ferner eine Kommunikationsschnittstelle (24) zum Senden der Information an den ersten Netzwerkknoten umfasst.

11. Störungsbeurteilungsfähige Vorrichtung nach Anspruch 10, worin der Übertragungsaktivitätsermittler dafür konfiguriert ist, eine Aufforderung, Übertragungsaktivitätsbestimmung durchzuführen, vom ersten Netzwerkknoten zu empfangen und die Übertragungsaktivität auf der Grundlage der Aufforderung zu bestimmen.

12. Störungsbeurteilungsfähige Vorrichtung nach Anspruch 10 oder 11, ferner einen Fähigkeitsinformator (28) umfassend, der dafür konfiguriert ist, eine Fähigkeitsinformation an den ersten Netzwerkknoten zu senden, wobei diese Fähigkeitsinformation angibt, dass die Vorrichtung zum Bestimmen der Übertragungsaktivität des zweiten Netzwerkknotens in Beziehung zu den durch ihn versorgten Teilnehmereinrichtungseinheiten fähig ist.

13. Störungsbeurteilungsfähige Vorrichtung nach Anspruch 12, worin die Fähigkeitsinformation durch zusätzliche Daten begleitet wird, die eines oder mehr von Folgendem angeben:

Bedingungen, unter denen die erste Teilnehmereinrichtungseinheit imstande ist, eine Übertragungsaktivitätsbestimmung des zweiten Netzwerkknotens bezogen auf durch ihn versorgte Teilnehmereinrichtungseinheiten durchzuführen, und

einen oder mehrere Kanäle, welche die Teilnehmereinrichtungseinheit zum Durchführen einer Übertragungsaktivitätsbestimmung des zweiten Netzwerkknotens bezogen auf durch ihn versorgte Teilnehmereinrichtungseinheiten zu verwenden imstande ist.

14. Störungsbeurteilungsfähige Vorrichtung nach einem der Ansprüche 10 bis 13, bei welcher der Übertragungsaktivitätsermittler durch die zweite von zwei unabhängigen Empfängerketten implementiert wird.

15. Störungsbeurteilungsfähige Vorrichtung nach einem der Ansprüche 1 bis 9, worin die störungsbeurteilungsfähige Vorrichtung in den ersten Netzwerkknoten (20) einbezogen ist und ferner eine Einheit (34) zum Verbessern der Kommunikation zum und vom ersten Netzwerkknoten unter Verwendung der Übertragungsaktivitätsdaten umfasst.

16. Störungsbeurteilungsfähige Vorrichtung nach Anspruch 15, worin der Übertragungsaktivitätsermittler (25) eine Messungseinheit umfasst, die eine Teilnehmereinrichtungseinheit imitiert.

17. Verfahren zum Untersuchen von Störung in einem heterogenen Mobilkommunikationssystem, wobei das System einen ersten Netzwerkknoten (20) umfasst, der eine erste Teilnehmereinrichtungseinheit (22) versorgt, und einen zweiten Netzwerkknoten (21) umfasst, der Störung an der Kommunikation zwischen dem ersten Netzwerkknoten und der ersten Teilnehmereinrichtungseinheit verursacht, wobei es den ersten und zweiten Netzwerkknoten an Anbindungskommunikation untereinander mangelt, wobei das Verfahren in einer störungsbeurteilungsfähigen Vorrichtung (27) durchgeführt wird und umfasst:

durch den Übertragungsaktivitätsermittler erfolgendes Bestimmen (42; 58; 72) der Übertragungsaktivität des ersten Netzwerkknotens durch Lesen eines Abwärtsstreckensteuerkanals des zweiten Netzwerkknotens, wodurch die für die Kommunikation zwischen dem zweiten Netzwerkknoten und den durch ihn versorgten Teilnehmereinrichtungseinheiten zugewiesenen Ressourcen ermittelt werden, und

Bereitstellen (44; 66; 74) von Information über die Übertragungsaktivität für eine Empfangseinheit (32) des ersten Netzwerkknotens, worin die Information Daten umfasst, welche die ermittelten Ressourcen angeben, um zu ermöglichen, dass die Information beim Verbessern der Kommunikation zum und vom ersten Netzwerkknoten verwendet wird.

**Revendications**

1. Dispositif apte à l'évaluation du brouillage (27) destiné à examiner un brouillage dans un système de communication mobile hétérogène, le système comprenant un premier noeud de réseau (20) desservant une première unité d'équipement d'utilisateur (22) et comprenant un second noeud de réseau (21) occasionnant un brouillage sur la communication entre le premier noeud de réseau et la première unité d'équipement d'utilisateur, les premier et second noeuds de réseau étant dépourvus de communication de raccordement entre eux, le dispositif apte à l'évaluation du brouillage comportant

un détecteur d'activité de transmission (25) configuré de manière à déterminer l'activité de transmission du second noeud de réseau par la lecture d'un canal de commande de liaison descendante du second noeud de réseau, ce qui permet de détecter par conséquent les ressources affectées en vue d'une communication entre le second noeud de réseau et les unités d'équipement d'utilisateur desservies par celui-ci ; et

un générateur de signal (26) configuré de manière à fournir des informations sur ladite activité de transmission à une unité de réception (32) du premier noeud de réseau, dans lequel les informations comportent des données identifiant les ressources détectées, afin de permettre que les informations soient utilisées en vue d'améliorer les communications à destination et en provenance du premier noeud de réseau.

2. Dispositif apte à l'évaluation du brouillage (27) selon la revendication 1, dans lequel le détecteur d'activité de transmission, lors de la détermination de l'activité de transmission du second noeud de réseau, est configuré de manière à déterminer au moins un indicateur d'activité de transmission, sur la base de l'activité de transmission déterminée, où lesdites informations comportent ledit indicateur d'activité de transmission.

3. Dispositif apte à l'évaluation du brouillage selon la revendication 1 ou 2, dans lequel le détecteur d'activité de transmission est en outre configuré de manière à déterminer l'activité de transmission déclenchée par un état d'initiation de détermination.

4. Dispositif apte à l'évaluation du brouillage selon la revendication 3, dans lequel l'état d'initiation de détermination est un paramètre de réception supérieur à un seuil de paramètre de réception correspondant (TH2).

5. Dispositif apte à l'évaluation du brouillage selon la revendication 3, dans lequel l'état d'initiation de détermination est l'état où est atteint un instant auquel l'activité de transmission doit être déterminée.

6. Dispositif apte à l'évaluation du brouillage selon l'une quelconque des revendications 1 à 5, dans lequel le détecteur d'activité de transmission, lors de la détermination de l'activité de transmission, est configuré de manière à estimer l'activité de transmission sur la base du brouillage rencontré.

7. Dispositif apte à l'évaluation du brouillage selon la revendication 6, dans lequel l'activité de transmission est estimée en fonction d'une puissance reçue totale, d'une intensité du signal du premier noeud de réseau, et du bruit rencontré.

8. Dispositif apte à l'évaluation du brouillage selon la revendication 7, dans lequel l'activité de transmission estimée est obtenue sous la forme de la puissance reçue totale moins l'intensité du signal et le bruit.

9. Dispositif apte à l'évaluation du brouillage selon l'une quelconque des revendications précédentes, dans lequel le détecteur d'activité de transmission, lors de la détermination de l'activité de transmission du second noeud de réseau, est en outre configuré de manière à comparer l'activité de transmission à un seuil d'activité de transmission (TH1) et à ne permettre au générateur de signal de fournir les informations que si l'activité de transmission est supérieure au seuil d'activité de transmission.

10. Dispositif apte à l'évaluation du brouillage selon l'une quelconque des revendications précédentes, dans lequel le dispositif apte à l'évaluation du brouillage est inclus dans la première unité d'équipement d'utilisateur desservie par le premier noeud de réseau, et comprenant en outre une interface de communication (24) destinée à envoyer les informations au premier noeud de réseau.

11. Dispositif apte à l'évaluation du brouillage selon la revendication 10, dans lequel le détecteur d'activité de transmission est configuré de manière à recevoir une demande de mise en oeuvre de détermination d'activité de transmission en provenance du premier noeud de réseau, et à déterminer l'activité de transmission sur la base de la demande.

12. Dispositif apte à l'évaluation du brouillage selon la revendication 10 ou 11, comportant en outre un indicateur de capacités (28) configuré de manière à envoyer des informations de capacités au premier noeud de réseau, lesquelles informations de capacités indiquent que ledit dispositif est apte à déterminer l'activité de transmission du second noeud de réseau relativement à des unités d'équipement d'utilisateur desservies par celui-ci.

13. Dispositif apte à l'évaluation du brouillage selon la revendication 12, dans lequel les informations de capacités s'accompagnent de données supplémentaires indiquant un ou plusieurs éléments parmi :

les conditions en vertu desquelles la première unité d'équipement d'utilisateur est apte à mettre en oeuvre une détermination d'activité de transmission du second noeud de réseau relativement à des unités d'équipement d'utilisateur desservies par celui-ci ; et
un ou plusieurs canaux que la première unité d'équipement d'utilisateur est en mesure d'utiliser en vue de mettre en oeuvre une détermination d'activité de transmission du second noeud de réseau relativement à des unités d'équipement d'utilisateur desservies par celui-ci.

14. Dispositif apte à l'évaluation du brouillage selon l'une quelconque des revendications 10 à 13, où le détecteur d'activité de transmission est mis en oeuvre à travers la seconde parmi deux chaînes de récepteurs indépendantes.

15. Dispositif apte à l'évaluation du brouillage selon l'une quelconque des revendications 1 à 9, dans lequel le dispositif apte à l'évaluation du brouillage est inclus dans le premier noeud de réseau (20), et comprenant en outre une unité (34) destinée à améliorer les communications à destination et en provenance du premier noeud de réseau, en utilisant les données d'activité de transmission.

16. Dispositif apte à l'évaluation du brouillage selon la revendication 15, dans lequel le détecteur d'activité de transmission (25) comporte une unité de mesure qui imite une unité d'équipement d'utilisateur.

17. Procédé d'examen du brouillage dans un système de communication mobile hétérogène, le système comprenant un premier noeud de réseau (20) desservant une première unité d'équipement d'utilisateur (22) et comprenant un second noeud de réseau (21) occasionnant un brouillage sur la communication entre le premier noeud de réseau et la première unité d'équipement d'utilisateur, où les premier et second noeuds de réseau sont dépourvus de communication de raccordement entre eux, le procédé étant mis en oeuvre dans un dispositif apte à l'évaluation du brouillage (27), et consistant à :

déterminer (42 ; 58 ; 72), par le biais du détecteur d'activité de transmission, l'activité de transmission du second noeud de réseau, par la lecture d'un canal de commande de liaison descendante du second noeud de réseau, ce qui permet de détecter par conséquent les ressources affectées en vue d'une communication entre le second noeud de réseau et les unités d'équipement d'utilisateur desservies par celui-ci ; et

fournir (44 ; 66 ; 74) des informations concernant ladite activité de transmission, à une unité de réception (32) du premier noeud de réseau, dans lequel les informations comportent des données identifiant les ressources détectées, afin de permettre que les informations soient utilisées en vue d'améliorer les communications à destination et en provenance du premier noeud de réseau.

Fig. 1A

Fig. 1B

Fig. 2

EP 2 695 416 B1

Fig. 3

Fig. 4

24

22

SIGNALS INFO OF
SECOND NODE
TRANSMISSION
ACTIVITY

UE

DETECTS
TRANSMISSION
ACTIVITY OF
SECOND
NODE

FIRST
NETWORK
NODE
(SERVES
UE)

~20

THIRD
NETWORK
NODE
(ACQUIRES
INFO)

~23

SECOND
NETWORK
NODE
(NEIGHBORS
FIRST
NETWORK
NODE)

~21

Fig. 5

24
INTERFACE

22

25
TRANSMISSION
ACTIVITY DETECTOR

26
SIGNAL
GENERATOR

28
CAPABILITY
INFORMER

27

UE

Fig. 6

Fig. 7

DETERMINE TRANSMISSION
ACTIVITY OF SECOND
BASE STATION — 42

PROVIDE INFORMATION ABOUT
THE TRANSMISSION ACTIVITY
FOR RECEPTION UNIT OF
COMMUNICATION HANDLING DEVICE — 44

Fig. 8

RECEIVE INFORMATION ABOUT
TRANSMISSION ACTIVITY — 46

IMPROVE COMMUNICATION TO
AND FROM FIRST BASE STATION — 48

Fig. 9

```
┌─────────────────────────────────┐
│      RECEIVE CAPABILITY          │
│        INFORMATION               │────╮49
│                                  │
└─────────────────────────────────┘
                 │
                 ▼
┌─────────────────────────────────┐
│        SEND REQUEST TO           │
│   DETERMINE TRANSMISSION         │────╮50
│          ACTIVITY                │
└─────────────────────────────────┘
                 │
                 ▼
┌─────────────────────────────────┐
│     RECEIVE INFORMATION          │
│     COMPRISING DATA              │
│       IDENTIFYING                │────╮52
│    ALLOCATED RESOURCES           │
└─────────────────────────────────┘
                 │
                 ▼
┌─────────────────────────────────┐
│       SET TRANSMISSION           │
│  PARAMETERS FOR MS AVOIDING      │────╮54
│   ALLOCATED RESOURSES OF         │
│      INTERFERECE DATA            │
└─────────────────────────────────┘
```

Fig. 10

```
┌─────────────────────────────────────────┐
│                                         │
│       SEND CAPABILITY INFORMATION       │──55
│                                         │
└─────────────────────────────────────────┘
                     │
                     ▼
┌─────────────────────────────────────────┐
│                                         │
│            RECEIVE REQUEST              │──56
│                                         │
└─────────────────────────────────────────┘
                     │
                     ▼
┌─────────────────────────────────────────┐
│         DETERMINE ALLOCATED             │
│        RESOURCES THROUGH                │
│         MEASUREMENT                     │──58
│       ON CONTROL CHANNEL                │
└─────────────────────────────────────────┘
                     │
                     ▼
┌─────────────────────────────────────────┐
│       COMPARE WITH TRANSMISSON          │
│       ACTIVITY THRESHOLD TH1            │──60
│                                         │
└─────────────────────────────────────────┘
                     │
                     ▼
                    62
                 ╱╲           ┌──────────┐
               ╱    ╲    N    │ DO NOT   │
             ╱ ABOVE  ╲──────▶│  SEND    │──64
             ╲  TH1?  ╱       └──────────┘
               ╲    ╱
                 ╲╱
                  │ Y
                  ▼
┌─────────────────────────────────────────┐
│       SEND INFORMATION ABOUT            │
│       TRANSMISSION ACTIVITY             │──66
│                                         │
└─────────────────────────────────────────┘
```

Fig. 11

COMPARE RECEPTION
PARAMETER WITH RECEPTION
PARAMETER THRESHOLD TH2 — 68

ABOVE
TH2? — 70

N

Y

ESTIMATE TRANSMISSION
ACTIVITY BASED ON FUNCTION
OF $I_E = f(I_p, P_{SERV}, N_O)$ — 72

SEND INFORMATION ABOUT
TRANSMISSION ACTIVITY — 74

Fig. 12

RECEIVE INFORMATION ABOUT
TRANSMISSION ACTIVITY
— 76

SET MS ACTIVITY LEVEL — 78

PROVIDE INFORMATION ABOUT
TRANSMISSION ACTIVITY
TO THIRD NETWORK NODE
— 80

**Fig. 13**

20 — FIRST NODE — 27

**Fig. 14**

**EP 2 695 416 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090197588 A1